# EUROPEAN PATENT APPLICATION

(11) **EP 1 744 307 A1**
(43) Date of publication of application: **17.01.2007**
(21) Application number: 05737184.1
(22) Date of filing: 28.04.2005
(51) Int. Cl.: G11B 7/085, G11B 21/02

(54) **OPTICAL DISK DEVICE**

(30) Priority: 07.05.2004 JP 2004138331
(71) Applicant: Matsushita Electric Industrial Co., Ltd., Osaka 571-8501 (JP)
(72) Inventor: HASEGAWA, Kazunori, Chuo-ku Osaka 540-6319 (JP); NAKAYAMA, Tsukasa, Chuo-ku Osaka 540-6319 (JP); NISHIDA, Hiroto, Chuo-ku Osaka 540-6319 (JP); NAKADE, Isamu, Chuo-ku Osaka 540-6319 (JP)
(74) Representative: Grünecker, Kinkeldey, Stockmair & Schwanhäusser Anwaltssozietät
(86) International application number: PCT/JP2005/008200
(87) International publication number: WO 2005/109416

(57) **Abstract**

An optical disk device is enabled to reduce the cost and the size by reducing the number of parts to lighten and simplify the mechanism.

When the information recorded in an optical disk 12 housed in a body is to be read out by an optical head unit 20, first and second traverse gears 42A and 42B are turned by a drive gear 41. The optical head unit 20 is moved along a support member 30 in the radial direction of the optical disk 12 by a connecting arm 43 connecting the second traverse gear 42B and the optical head unit 20. The support member 30 is turned to a play position and a standby position with respect to the optical disk 12 by the first traverse gear 42A and the second traverse gear 42B for moving the optical head unit 20. As a result, the turning motion of the support member 30 and the movement of the optical head unit 20 can be performed by the simple mechanism to simplify the moving mechanism. At the same time, the number of parts can be reduced to reduce the weight thereby to effect the cost reduction and the compact size.

## Description

### <Technical Field>

The present invention relates to an optical disk device for performing at least one of the reproduction of information recorded in an optical disk and the recording of information in the optical disk.

### <Background Art>

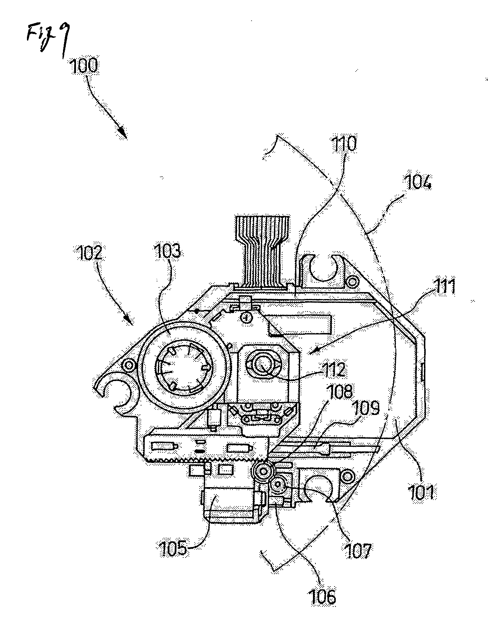

An optical disk device of the prior art is shown in Fig. 9.

This optical disk device 100 is provided with a chassis 101, which is equipped with a spindle motor assembly 102. This spindle motor assembly 102 has a turntable 103 capable of mounting an optical disk 104 thereon removably, and the turntable 103 is rotated by a DC motor 105 mounted on the chassis 101. On the spindle of the DC motor 105, there is mounted a worm 106, which meshes with a worm wheel 107. An idler gear 108 meshes with the worm wheel 107.

In the chassis 101, there are formed a V-groove rail 109 and a guide groove 110 in parallel with the radial direction of the optical disk 104 to be mounted. An optical pickup 111 is so disposed as to move reciprocally along the V-groove rail 109 and the guide groove 110. The chassis 101 is equipped at its lower end edge portion of Fig. 9 with a rack 113, which is so arranged in parallel with the V-groove rail 109 and the guide groove 110 as to mesh with the idler gear 108. The optical pickup 111 is equipped with an objective lens 112. This objective lens 112 is enabled to move in the focusing direction, i.e., to and from the optical disk 104 by the not-shown actuator.

Thus, when the information is to be reproduced from the optical disk 104 mounted on and rotated by the turntable 103, the DC motor 105 moves the optical pickup 111 in the radial direction of the optical disk 104 through the worm 106, the worm wheel 107, the idler gear 108 and the rack 113, so that the information recorded in the optical disk 104 is read out (as referred to Patent Document 1) by the objective lens 112 mounted on the optical pickup 111.

As another moving mechanism of the optical pickup 111, there is widely used a mechanism for moving the optical pickup in the radial direction of the optical disk by the combination of the recirculating screw and nut.

Patent Document 1: JP-A-7-320279 (Fig. 1)

### <Disclosure of the Invention>

In the optical disk device of the prior art thus far described, however, the parts to be used in the moving mechanism of the optical pickup 111 are so many and complex as to enlarge the size and raise the cost of the optical disk device. The parts to be attached to the optical pickup 111 on the moving side are increased to raise the weight on the side of the optical pickup thereby to cause another problem that optical disk device is weak against vibrations.

The present invention has been conceived to solve the problems of the prior art, and has an object to provide an optical disk device, which is enabled to reduce the cost and the size by reducing the number of parts to lighten and simplify the mechanism.

### <Means for Solving the Problems>

According to the invention, there is provided an optical disk device comprising: a body for housing an optical disk therein; an optical head unit disposed in said body for reproducing the information of said optical disk or for recording the information in said optical disk; a support member for supporting said optical head unit and for guiding the same along the radial direction of said optical disk; and a moving unit for moving said optical head unit along said support member. Said moving unit includes a traverse gear adapted to be driven by a drive gear, and a connecting arm for connecting said traverse gear and said optical head unit.

According to this structure, when the traverse gear is turned by the drive gear so that the information of the optical disk housed in the body inside may be reproduced or so that the recording of the information in the optical disk may be performed by the optical head unit, the optical head unit is moved along the support member and in the radial direction of the optical disk by the connecting arm connecting the traverse gear and the optical head unit. As a result, the moving mechanism can be simplified without equipping the optical head unit with the moving unit such as the gear, and the number of parts can be reduced to effect the cost reduction and the compact size. Moreover, the optical head unit can be lightened and precisely positioned.

In an optical disk device according to the invention, said optical head unit includes a sliding members for contacting with the widthwise end edge portion of said support member and for sliding along the radial direction of said optical disk.

According to this structure, the optical head unit is slid radially of the optical disk along the support member by the sliding members disposed at the optical head unit. Therefore, any guide member need not be provided to reduce the number of parts and the weight.

In an optical disk device according to the invention, said optical head unit includes sliding members for clamping said support member widthwise in contact with the end edge portions of the two widthwise sides of said support member and for sliding along the radial direction of said optical disk.

According to this structure, the optical head unit is slid radially of the optical disk while clamping the support member widthwise in contact with the end edge portions of the two widthwise sides of the support member. Therefore, the optical head unit is stably supported by the support member.

In an optical disk device according to the invention, said support member has a band shape, and wherein said sliding members are at least three rolling rollers clamping said support member widthwise in contact with the widthwise end edge portions of said support member and for rolling thereon.

According to this structure, the optical head unit is movably supported on the support member of the band shape so that it can reliably move without any backlash. By arranging the three rolling rollers two by one in the opposing manner, for example, the optical head unit never fails to be stably supported on the support member.

In an optical disk device according to the invention, said support member can roll on the end portion, as said transverse gear rotates, to a record/play position and to a standby position with respect to said optical disk, and wherein when said support member turns to said record/play position, said moving unit moves said optical head unit to a record/play starting position.

According to this structure, the support member rolls to the record/play position and the standby position with respect to the optical disk by the traverse gear for moving the optical head unit, so that the support member can be turned by the simple mechanism. Moreover, the support member can be positioned at the standby position having no interference with the optical disk, so that the structure is suited for the optical disk device of the multi-disk drive type for allowing one of the optical disks to be selected to be played. When the support member is turned to the play position, moreover, the optical head unit has already been positioned at the play starting position so that it can start the play quickly.

### <Advantage of the Invention>

The optical disk device according to the invention is provided with the traverse gear to be driven by the drive gear and the connecting arm for connecting the traverse gear and the optical head unit, as the moving unit for moving the optical head unit along the support member, when the information of the optical disk housed in the body inside is reproduced or when the information is recorded in the optical disk by the optical head unit. As a result, the optical head unit need not be equipped with the moving unit such as a gear so that the moving mechanism can be simplified, and the number of parts can be reduced to lighten the weight thereby to effect the cost reduction and the compact size.

### <Brief Description of the Drawings>

Fig. 1 is a perspective view showing a car audio device having an optical disk device of an embodiment of the invention packaged therein;
Fig. 2 is a top plan view showing the optical disk device of the embodiment of the invention;
Fig. 3 is a top plan view showing a first traverse gear in a standby position;
Fig. 4 is a top plan view showing a second traverse gear in the standby position;
Fig. 5 is a top plan view showing the state at the time of starting a turning motion from the standby position or in the movement from a play position to the standby position;
Fig. 6 is a top plan view showing the state of movement from the standby position to the play position or from the play position to the standby position;
Fig. 7 is a top plan view showing the state, in which the optical disk device arrives and is fixed at the play position;
Fig. 8 is a top plan view showing the state, in which an optical head unit moves along a suspension chassis fixed at the play position; and
Fig. 9 is a top plan view showing the optical disk device of the prior art.

### <Description of Reference Numerals and Signs>

- 10: Optical Disk Device
- 12: Optical Disk
- 13: Body
- 20: Optical Head Unit
- 23: Rolling Roller (Sliding Member)
- 30: Suspension Chassis
- 41: Drive Gear
- 42A: First Traverse Gear (Moving unit)
- 42B: Second Traverse Gear (Moving unit)
- 43: Connecting Arm (Moving unit)

### <Best Mode for Carrying Out the Invention>

An optical disk device of an embodiment of the invention is described with reference to the accompanying drawings.

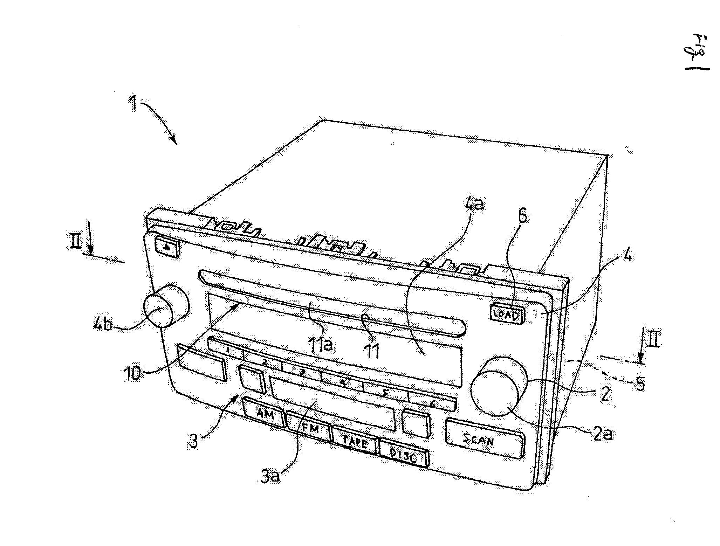

Fig. 1 is a perspective view showing the entirety of a car audio device 1 having an optical disk device 10 of an embodiment of the invention packaged therein. This car audio device 1 has not only the optical disk device 10 but also a radio 2 and a cassette tape playing device 3 packaged therein. The car audio device 1 is equipped on its front panel 4 with a display unit 4a shared for all functions and an ON/OFF-volume knob 4b, an optical disk insert 11 for the optical disk device 10, a radio tuning knob 2a and a cassette tape slot 3a. The car audio device 1 is equipped therein with a control unit 5 for controlling the radio 2, the cassette tape playing device 3 and the optical disk device 10.

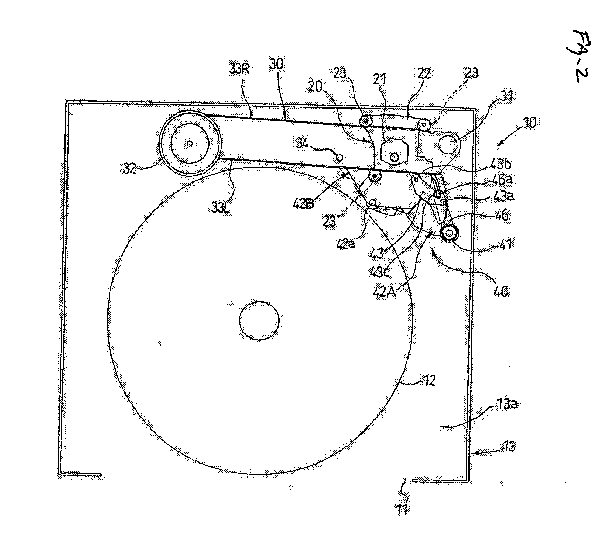

Fig. 2 is a sectional view taken along positions II - II of Fig. 1 and showing the optical disk device 10 packaged in the car audio device 1 and according to the embodiment of the invention.

As shown in Fig. 2, the optical disk device 10 includes: a body 13 for housing an optical disk 12 having information recorded therein; an optical head unit 20 disposed in the body 13 for reproducing the information of the optical disk 12; a suspension chassis 30 acting as a support member for supporting the optical head unit 20 and for guiding the optical head unit 20 along the radial direction of the optical disk 12; a first traverse gear 42A and a second traverse gear 42B acting as moving unit40 for moving the optical head unit 20 along that suspension chassis 30; and a connecting arm 43 for connecting the second traverse gear 42B and the optical head unit 20.

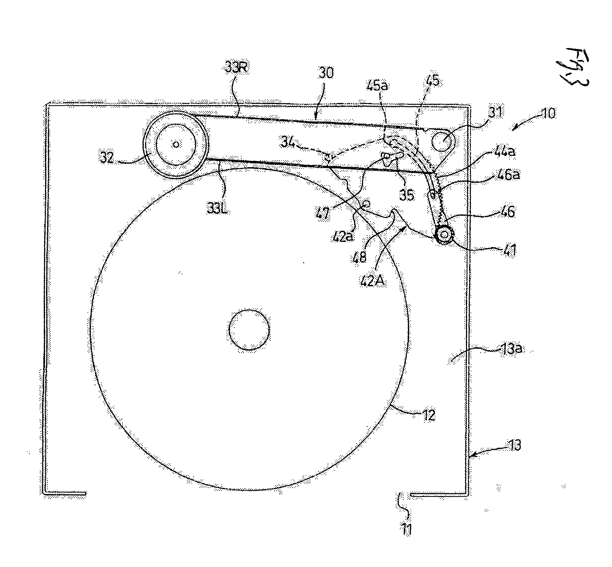

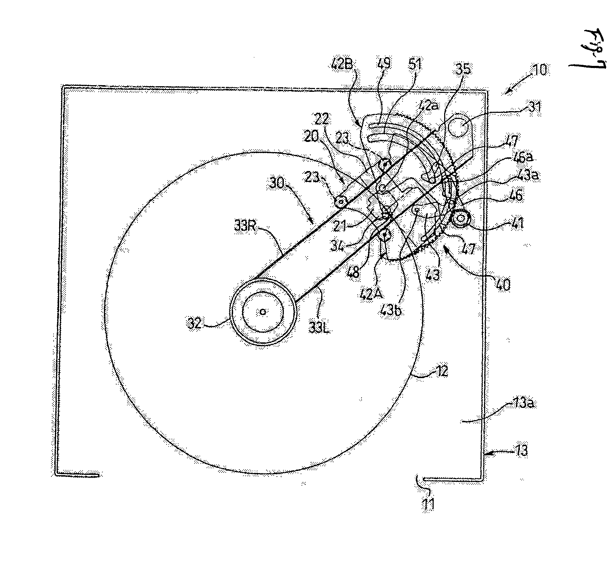

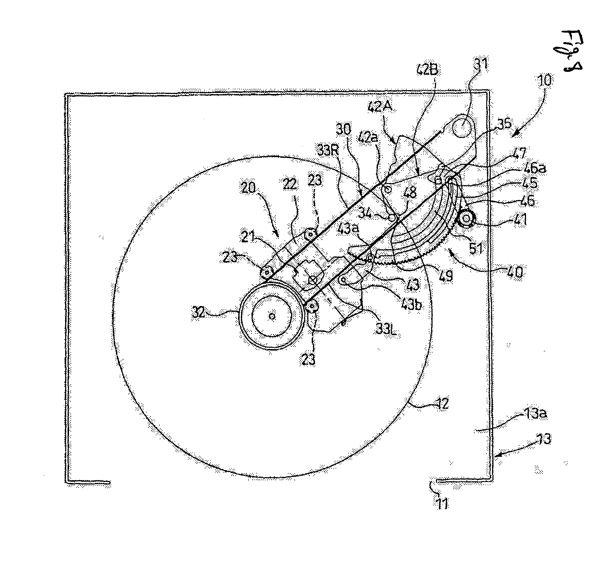

The suspension chassis 30 is formed into such a band shape as can be freely turned on a pivot pin 31 at its one end portion at least from the a standby position shown in Fig. 2 to a play position shown in Fig. 7 and Fig. 8. The suspension chassis 30 is equipped at its other end portion with a turntable 32, which is turned by the not-shown turn unit while gripping the center of the optical disk 12. On the other hand, the suspension chassis 30 is equipped on its two right and left side edges with right and left guide rails 33R and 33L extending in the longitudinal direction and supporting the optical head unit 20 movably. A lock pin 34 of a round rod is disposed to protrude downward from the lower face of the suspension chassis 30, and a cam hole 35 (as referred to Fig. 3) cut into a T-shape is formed in the suspension chassis 30.

The optical head unit 20 is equipped with a pickup 22 of a generally rectangular shape, which has an optical head 21 disposed at the center of its upper face and directed upward. On the lower face of the pickup 22, rolling rollers 23 are rotatably disposed as three or more (e.g., three) sliding members for contacting with the guide rails 33R and 33L of the suspension chassis 30 to clamp them widthwise. As a result, the optical head unit 20 can reciprocate stably along the suspension chassis 30 while clamping the guide rails 33R and 33L reliably without any chattering.

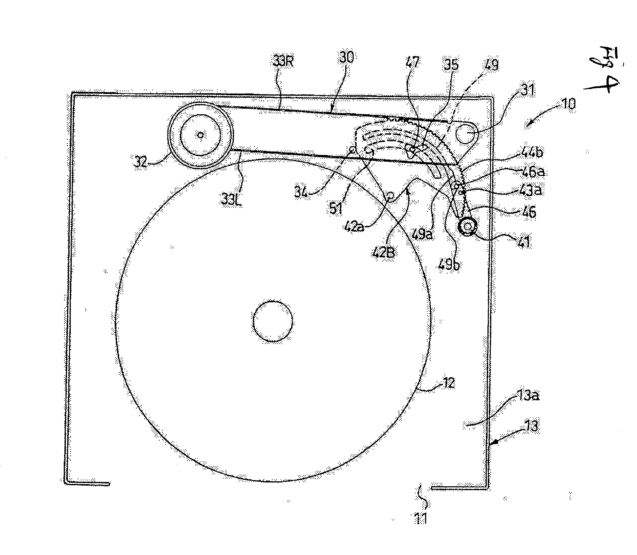

On the upper side of a floor 13a in the body 13, there is rotatably disposed a drive gear 41, which is rotatably driven by the not-shown drive unit disposed on the lower side of the floor 13a. On the upper side of the floor 13a, there are made separately rotatable on a turning center 42a the first traverse gear 42A on the lower side and the second traverse gear 42B on the upper side of the first traverse gear 42A. The first traverse gear 42A and the second traverse gear 42B are so toothed at 44a and 44b at their partially arcuate circumferential portions (as referred to Fig. 3 and Fig. 4) that they can be separately brought into and out of meshing engagement with the drive gear 41. Here, at least one of traverse gears 42A and 42B never fails to mesh with the drive gear 41.

The drive gear 41 is equipped with a timing lever 46. This timing lever 46 is so supported at its one end between the first traverse gear 42A and the second traverse gear 42B as to turn together with the drive gear 41 so that it is urged in the rotating direction of the drive gear 41 by a predetermined force. Specifically, the timing lever 46 is urged clockwise, when the drive gear 41 rotates clockwise, but counterclockwise when the drive gear 41 rotates counterclockwise. The timing lever 46 is equipped at its other end with a vertically projecting pin 46a, which can move along the grooves of the first traverse gear 42A and the second traverse gear 42B, as will be described hereinafter.

Fig. 3 shows the first traverse gear 42A. In order that the structure of the first traverse gear 42A may be easily understood, Fig. 3 shows the state, in which both the optical head unit 20 made movable over the suspension chassis 30 and the second traverse gear 42B made rotatable on the turning center 42a over the first traverse gear 42A are omitted.

In the first traverse gear 42A, as shown in Fig. 3, an arcuate cam groove 45 is formed around the turning center 42a, and a recess 45a cut toward the rotation center 42a is formed in the end portion on the remote side of the drive gear 41. The pin 46a disposed at the leading end of the timing lever 46 is movably fitted in the cam groove 45 and can also be fitted in the recess 45a. In the end face of the first traverse gear 42A on the right side of the turning center 42a, there is formed a locking recess 48 for clocking the lock pin 34 of the suspension chassis 30. From the upper face of the first traverse gear 42A, moreover, a cam shaft 47 is protruded to fit in the cam hole 35 of the suspension chassis 30 through the second traverse gear 42B.

Fig. 4 shows the second traverse gear 42B. In order that the structure of the second traverse gear 42B may be easily understood, Fig. 4 shows the state, in which both the optical head unit 20 made movable on the suspension chassis 30 and the first traverse gear 42A disposed below the second traverse gear 42 are omitted.

In the second traverse gear 42B, as shown in Fig. 4, an arcuate first cam groove 49 is formed around the turning center 42a, and a second cam groove 51 is formed in parallel with the inner side of the first cam groove 49. In the end portion of the first cam groove 49 on the side of the drive gear 41, there is formed a widened portion 49a, which is widened outward and which has a retaining recess 49b formed at its one end to fit the pin 46a of the timing lever 46. As shown in Fig. 2, the pickup 22 of the optical head unit 20 and the second traverse gear 42B are connected by the connecting arm 43, which is turnably connected at its one end to the second traverse gear 42B by a pin 43a and at its other end to the pickup 22 by a bin 43b.

As described hereinbefore, the timing lever 46 is interposed between the first traverse gear 42A and the second traverse gear 42B, and the pin 46a at the leading end of the timing lever 46 is movably fitted in the first cam groove 49. On the other hand, the connecting arm 43 has a notch 43c so that it may not interfere in the standby state with the pin 46a of the timing lever 46 extending upward through the first cam groove 49 of the second traverse gear 42B.

With reference to Fig. 2 to Fig. 8, here are described the turning motion of the suspension chassis 30 and the movement of the optical head unit 20 in the optical disk device 10.

In the standby state where the suspension chassis 30 is in the standby position, as shown in Fig. 2 to Fig. 4, the first traverse gear 42A and the second traverse gear 42B are turned to the most upstream side (in the counterclockwise direction), the pin 46a of the timing lever 46 retains the lower end of the cam groove 45 of the first traverse gear 42A and the retraining groove 49b of the first cam groove 49 of the second traverse gear 42B so that the two traverse gears 42A and 42B may not turn counterclockwise anymore. The first traverse gear 42A is in such a state that it can be clockwise turned by the rotation of the drive gear 41. On the other hand, the second traverse gear 42B is disengaged from the drive gear 41, and the pin 46a of the timing lever 46 retains the retaining groove 49b of the first cam groove 49. Even if the drive gear 41 rotates, therefore, the second traverse gear 42B is in such a state that it can be turned neither clockwise nor counterclockwise.

In the standby state, as shown in Fig. 3, the cam shaft 47 of the first traverse gear 42A extends through the second cam groove 51 (as referred to Fig. 4) of the second traverse gear 42B and through the cam hole 35 of the suspension chassis 30, and abuts against the upper side of the cam hole 35. Moreover, the lock pin 34 of the suspension chassis 30 abuts against the outer side face of the first traverse gear 42A (as referred to Fig. 2), and holds the suspension chassis 30 in the standby position while blocking its downward turn.

As shown in Fig. 2, the optical head unit 20 is located on the end portion of the side of the pivot pin 31 of the suspension chassis 30 because the second traverse gear 42B is at the most counterclockwise position.

When the drive gear 41 is rotated counterclockwise to turn the first traverse gear 42A clockwise, as shown in Fig. 4, the outer side face of the first traverse gear 42A having locked the lock pin 34 of the suspension chassis 30, as shown in Fig. 3, is released to permit the turning motion of the suspension chassis 30. The cam shaft 47 disposed in the first traverse gear 42A pushes down the side face of the cam hole 35 of the suspension chassis 30 so that the suspension chassis 30 begins to turn counterclockwise on the pivot pin 31.

As the drive gear 41 rotates counterclockwise, the timing lever 46 is urged counterclockwise so that the pin 46a comes out of the retaining recess 49b of the first cam groove 49 of the second traverse gear 42B. As a result, the second traverse gear 42B can also turn clockwise but is left at that position because no turning forces acts. As a result, the second traverse gear 42B does not start its turn yet, but the pickup 22 connected to the second traverse gear 42B by the connecting arm 43 is pushed to move toward the turntable 32 as the suspension chassis 30 turns.

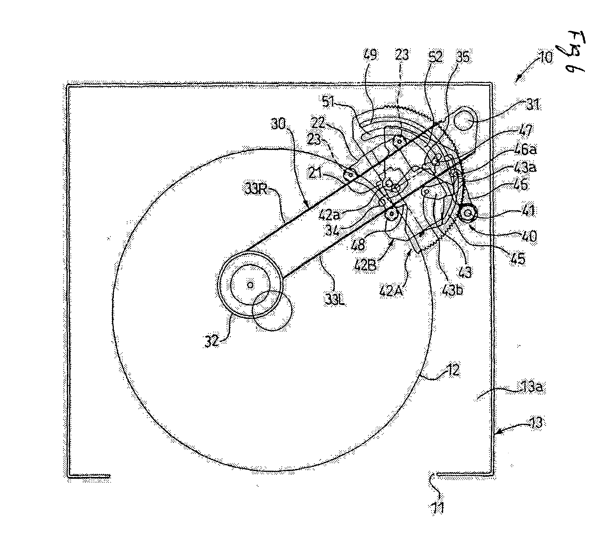

When the first traverse gear 42A turns clockwise while the second traverse gear 42B being unturned, as shown in Fig. 6, the cam shaft 47 of the first traverse gear 42A comes into abutment against the end portion of the second cam groove 51 of the second traverse gear 42B. Then, the second traverse gear 42B begins its clockwise turning motion as the first traverse gear 42A turns. As a result, the second traverse gear 42B have their teeth 44b meshing with the drive gear 41 so that it then turns according to the rotation of the drive gear 41.

When the drive gear 41 rotates counterclockwise so that the two traverse gears 42A and 42B rotate clockwise, the suspension chassis 30 is pushed by the cam shaft 47 to the play position, as shown in Fig. 7, and the first traverse gear 42A turns clockwise so that the lock pin 34 of the suspension chassis 30 is fitted in the locking recess 48. As a result, the suspension chassis 30 is fixed at the play position. At this time, the second traverse gear 42B meshes with the drive gear 41, and the first traverse gear 42A begins to come out of the drive gear 41. The timing lever 46 is urged counterclockwise, and the pin 36a is pushed and retained in the recess 45a formed in the leading end of the cam groove 45 of the first traverse gear 42A so that the first traverse gear 42A then stops its turning motion.

When the drive gear 41 is further rotated counterclockwise, only the second traverse gear 42B turns clockwise to push the pickup 22 through the connecting arm 43. As a result, the pickup 22 moves along the suspension chassis 30 toward the turntable 32 so that it reaches the play starting position, as shown in Fig. 8.

When the play is started, the drive gear 41 is rotated clockwise to turn the second traverse gear 42B counterclockwise so that the pickup 22 can be moved to the outer circumference of the optical disk 12. When the drive gear 41 is rotated counterclockwise to turn the second traverse gear 42B clockwise, on the contrary, the pickup 22 can be moved toward the center of the optical disk 12. As a result, the pickup 22 can be reciprocally moved to a desired position so that the information of a predetermined position of the optical disk 12 can be read by the optical head 21.

When the playing operation is completed, the drive gear 41 is rotated clockwise, as shown in Fig. 7, so that only the second traverse gear 42B is turned counterclockwise to move the pickup 22 to the outer circumference of the optical disk 12. When the drive gear 41 is further rotated clockwise from that state, the second traverse gear 42B is turned counterclockwise while the timing lever 46 being urged clockwise. When the pin 46a of the timing lever 46 reaches the widened portion 49a of the first cam groove 49, the timing lever 46 slightly turns clockwise so that the pin 46a of the timing lever 46 is pushed out of the recess 45a of the cam groove 45 of the first traverse gear 42A. This makes the first traverse gear 42A turnable.

When the drive gear 41 is further rotated clockwise, the second traverse gear 42B is turned counterclockwise so that the end portion of the second cam groove 51 comes into abutment against the cam shaft 47 of the first traverse gear 42A (as shown in Fig. 7) thereby to move the cam shaft 47 integrally with the second traverse gear 42B. As a result, the first traverse gear 42A turns counterclockwise so that the lock pin 34 of the suspension chassis 30 comes out of the locking recess 48 of the first traverse gear 42A thereby to make the suspension chassis 30 turnable. Simultaneously, the first traverse gear 42A turns counterclockwise so that the teeth 44a come into meshing engagement with the drive gear 41.

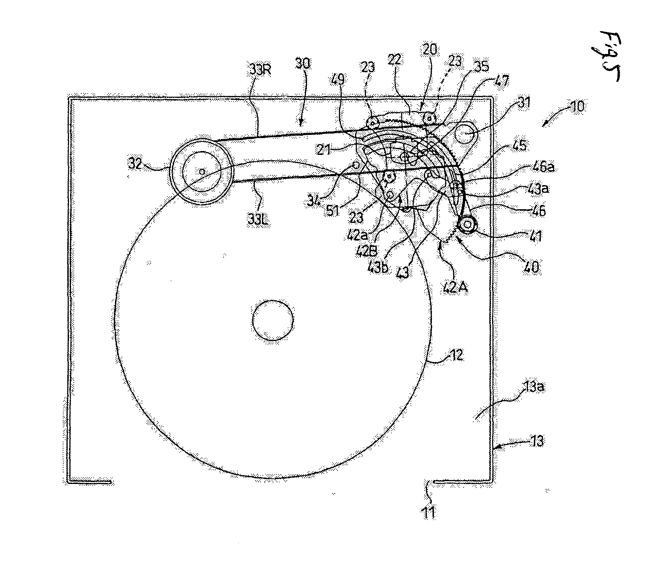

When the drive gear 41 is rotated clockwise to turn the first traverse gear 42A and the second traverse gear 42B counterclockwise, as shown in Fig. 6 and Fig. 5, the cam shaft 47 abuts against the cam hole 35 of the suspension chassis 30 thereby to turn the suspension chassis 30 clockwise and to move the pickup 22 toward the pivot pin. Moreover, the drive gear 41 returns, when turned clockwise, to the standby position, as shown in Fig. 2.

According to the optical disk device 10 of the embodiment of the invention thus far described, when the information recorded in the optical disk 12 housed in the body 13 is to be read out by the optical head unit 20, the moving unit for turning the suspension chassis 30 to the play position and for moving the optical head unit 20 along the suspension chassis 30 in the play position is exemplified by the first traverse gear 42A and the second traverse gear 42B driven by the drive gear 41 and by the connecting arm 43 for connecting the second traverse gear 42B and the optical head unit 20. As a result, the moving unit such as the gear need not be disposed at the optical head unit 20 to simplify the moving mechanism and to reduce the number and weight of parts thereby to effect the cost reduction and the compact size.

Here, the optical disk device 10 of the invention should not be limited to embodiment thus far described but can be properly modified and improved.

For example, the embodiment has been described on the case, in which the pickup 22 is provided with the three or more (e.g., three) rolling rollers 23 for contacting and clamping the guide rails 33R and 33L of the suspension chassis 30. In addition, moreover, the sliding members may not roll but may slide in contact with the guide rails 33R and 33L or may clamp or slide the guide rails 33R and 33L in contact.

This application is based on Japanese Patent Application (JP-A-2004-138331) filed on May 7, 2004.

### Industrial Applicability

As has been described hereinbefore, the optical disk device according to the invention is provided with the traverse gear to be driven by the drive gear and the connecting arm for connecting the traverse gear and the optical head unit, as the moving unit for moving the optical head unit along the support member when the information recorded in the optical disk housed in the body inside is read from the optical head unit. As a result, the optical head unit need not be equipped with the moving unit such as a gear so that the moving mechanism can be simplified, and the number of parts can be reduced to lighten the weight thereby to effect the cost reduction and the compact size. Thus, the optical disk device of the invention is useful as one for performing at least one the reproduction of the information recorded in the optical disk and the record of the information in the optical disk.

## Claims

1. An optical disk device, comprising:
a body for housing an optical disk therein;
an optical head unit disposed in said body for reproducing the information of said optical disk or for recording the information in said optical disk;
a support member for supporting said optical head unit and for guiding the same along the radial direction of said optical disk; and
a moving unit for moving said optical head unit along said support member,
wherein said moving unit includes a traverse gear adapted to be driven by a drive gear, and a connecting arm for connecting said traverse gear and said optical head unit.

2. The optical disk device as set forth in claim 1,
wherein said optical head unit includes a sliding members for contacting with the widthwise end edge portion of said support member and for sliding along the radial direction of said optical disk.

3. The optical disk device as set forth in claim 1 or 2, wherein said optical head unit includes sliding members for clamping said support member widthwise in contact with the end edge portions of the two widthwise sides of said support member and for sliding along the radial direction of said optical disk.

4. The optical disk device as set forth in claim 3,
wherein said support member has a band shape, and wherein said sliding members are at least three rolling rollers clamping said support member widthwise in contact with the widthwise end edge portions of said support member and for rolling thereon.

5. The optical disk device as set forth in any of claims 1 to 4, wherein said support member can roll on the end portion, as said transverse gear rotates, to a record/play position and to a standby position with respect to said optical disk, and wherein when said support member turns to said record/play position, said moving unit moves said optical head unit to a record/play starting position.
